# EUROPÄISCHE PATENTSCHRIFT

(11) **EP 4 163 527 B1**
(45) Veröffentlichungstag und Bekanntmachung des Hinweises auf die Patenterteilung: **26.11.2025**
(21) Anmeldenummer: 22199239.9
(22) Anmeldetag: 30.09.2022
(51) Int. Cl.: F16L 11/127, F16L 11/08

(54) **SCHLAUCH ZUR TEMPERATUR- UND DRUCKMESSUNG**
HOSE FOR MEASURING TEMPERATURE AND PRESSURE
TUYAU FLEXIBLE POUR MESURER LA TEMPÉRATURE ET LA PRESSION

(30) Priorität: 11.10.2021 DE 102021211420
(43) Veröffentlichungstag der Anmeldung: 12.04.2023
(73) Patentinhaber: ContiTech Deutschland GmbH, 30175 Hannover (DE)
(72) Erfinder: Borchert, Lukas, 30165 Hannover (DE); Brühne, Klaus, 30165 Hannover (DE); Grib, Alexej, 30165 Hannover (DE); Dr. Schirrmacher, Sebastian, 30165 Hannover (DE); Dr. Sostmann, Stefan, 30165 Hannover (DE)
(74) Vertreter: Preusser, Andrea

(56) Entgegenhaltungen:
- EP-B1- 2 876 421
- EP-B1- 3 412 951
- WO-A1-2017/141901
- AT-U1- 6 114
- CN-A- 108 700 227
- DE-A1- 102017 105 365
- DE-A1- 102018 216 272
- DE-A1- 2 800 798
- FR-B1- 2 847 342
- US-A1- 2010 007 325
- US-A1- 2019 022 684
- US-B2- 9 677 967

## Beschreibung

Die vorliegende Erfindung betrifft einen mehrschichtigen Schlauch, umfassend mindestens eine elektrisch leitfähige Schicht, wobei die mindestens eine elektrisch leitfähige Schicht mit einer Messeinrichtung verbunden ist, die derart ausgebildet ist um den elektrischen Widerstand der mindestens einen elektrisch leitfähigen Schicht zu messen, ein Verfahren zur Messung eines Drucks und/oder einer Temperatur in einem solchen mehrschichtigen Schlauch ausgehend von dem gemessenen elektrischen Widerstands und die Verwendung eines solchen mehrschichtigen Schlauch in einem Kraftfahrzeug.

Für zahlreiche technische Anwendungen ist die Erfassung des Druckes und/oder der Temperatur von Objekten oder flüssigen, gasförmigen bzw. pastösen Medien erforderlich, um diese z. B. zur Überwachung der Einhaltung vorbestimmter Druck- bzw. Temperaturgrenzen oder zur Regelung von Prozessen auf vorbestimmte Drücke bzw. Temperaturen zu verwenden.

So kann der Druck bzw. die Temperatur eines Mediums z.B. in einem Speicher eines Mediums wie einem Tank oder insbesondere in einem Schlauch zum Transport des Mediums relevant sein, um einen Prozess in Abhängigkeit dieses Druckes bzw. dieser Temperatur zu betreiben oder den Druck bzw. die Temperatur des Mediums zu überwachen.

Ferner ist es bei Schlauchanwendungen in vielen Bereichen nicht nur vorteilhaft, sondern auch erforderlich, den Druck bzw. die Temperatur in einem durchströmten Schlauch in Betrieb zu erfassen.

Für derartige Anwendungen ist es bekannt, eine Druck- bzw. Temperaturmessung in einem Schlauch mittels eines T-Stückes durchzuführen, welches über eine Stichleitung an den Schlauch angeschlossen wird.

Alternativ kann durch die Wandung des Schlauches ein entsprechender Messfühler eingeführt werden.

Die DE 2017 105365 A1 betrifft ein Verfahren zur Anzeige des Verschleißes bei Schläuchen, wobei der Schlauch eine Schlauchwand aus Kunststoff, eine Armierung aus Kunststoff oder Metall, und einen elektrischen Leiter umfasst.

Die AT 6 114 U1 betrifft einen Verschleißindikator für Schläuche aus Kunststoff oder Gummi zum Transport abrasiver Medien, welcher in der Schlauchwand angeordnet ist und zumindest einen elektrischen Leiter aufweist, welcher Teil eines elektronischen Schaltkreises ist.

Die US 2010/007325 A1 betrifft ein System zur Erkennung von Schlauchdefekten bestehend aus einer Schlauchleitung und einem Defektdetektor. Die Schlauchleitung besteht aus einer ersten leitfähigen Schicht, einer zweiten leitfähigen Schicht und einer Zwischenschicht, die zwischen der ersten und der zweiten leitfähigen Schicht angeordnet ist.

Die US 2019/022684 A1 betrifft ein Flüssigkeitsabgabesystem, welches einen intelligenten Schlauch umfasst, welcher eine Flüssigkeitsleitung und ein erstes elektrisch leitendes Element umfasst, das so konfiguriert ist, dass es Elektrizität über eine Länge des intelligenten Schlauchs abgibt.

Die EP 2 876 421 B1 betrifft einen elastomeren Hohlkörper, insbesondere einen elastomeren Schlauch, zur Leitung und bzw. oder Aufnahme flüssiger, gasförmiger und bzw. oder pastöser Medien mit einem Sensorelement zur Erfassung eines Druckes, sowie ein Verfahren zur Druckerfassung eines derartigen elastomeren Hohlkörpers.

Die US 9 677 967 B2 betrifft ein Drucksensor Schlauchsystem, das einen Schlauch mit einer ersten und einer zweiten leitfähigen Schicht und einen Stromkreis umfasst, der mit der ersten und der zweiten leitfähigen Schicht der Schlauchanordnung elektrisch verbunden ist.

Die DE 102018 216272 A1 betrifft ein längliches Hohlkörpersystem zur Förderung eines Mediums mit wenigstens einem länglichen Hohlkörper mit einem Mantel, welcher einen Innenraum derart umschließt, sodass das Medium durch den Innenraum gefördert werden kann, und mit wenigstens einer Sensoreinheit, welche mit dem länglichen Hohlkörper verbunden ist.

Die EP 3 412 951 B1 betriff ein System zum Überwachen des Status eines Marineschlauchs, der einen Schlauchkörper mit einer inneren Oberflächenschicht, einer verstärkenden Schicht, die an einer Außenumfangsseite der inneren Oberflächenschicht angeordnet ist, und einer äußeren Oberflächenschicht versehen ist, die an einer Außenumfangsseite der verstärkenden Schicht angeordnet ist.

Die DE 28 00 798 A1 betrifft ein Verfahren zur Herstellung eines elektrisch halbleitenden flexiblen Rohres, welches durch Umspinnungen oder Ummantelungen aus Draht sowie spiralförmigen Bewicklungen aus vorher miteinander verklebten Textilfalten verstärkt sein kann.

Die FR 2 847 342 B1 betrifft die Erkennung des Auftretens eines Integritätsfehlers in einem Rohr aus einem elastisch verformbaren und elektrisch isolierenden Material, wobei ein elektrischer Leiter während der Herstellung in das Material des Rohrs eingebettet wird.

Die CN 108 700 227 A betrifft ein statische Elektrizität ableitendes Harzrohr das dadurch gekennzeichnet ist, dass es aus einer inneren Schicht, die mit der Flüssigkeit in Kontakt kommt, einer Zwischenschicht, die zwei Schichten umfasst, nämlich eine erste Zwischenschicht und eine zweite Zwischenschicht, einer Verstärkungsschicht und einer äußeren Schicht besteht.

Nachteilig ist bei den bekannten Druck- bzw. Temperatursensoren, die in Schläuchen eingesetzt werden, dass diese besondere bauliche Maßnahmen wie zusätzliche Abzweige, eine aufwendige Integration in den Aufbau des Schlauches sowie eine Führung der Signalleitungen in den bzw. durch die Schichten des Schlauches erfordern. Ferner sind viele Arten von Sensoren, insbesondere Drucksensoren, lediglich zur Erfassung eines Schwellwertes geeignet, jedoch nicht für kontinuierliche Messungen, insbesondere nicht für kontinuierliche Druckmessungen.

Eine Aufgabe der vorliegenden Erfindung ist es, einen Schlauch bereitzustellen, in dem der Druck und/oder die Temperatur des darin befindlichen Mediums kontinuierlich sowie einfacher, direkter und/oder genauer erfasst werden kann.

Diese Aufgabe wird erfindungsgemäß durch einen mehrschichtigen Schlauch gemäß Anspruch 1 sowie durch ein Verfahren zur Messung des Drucks und/oder der Temperatur in einem solchen Schlauch mit den Merkmalen gemäß Anspruch 4 gelöst.

Vorteilhafte Weiterbildungen sind in den Unteransprüchen beschrieben.

Nachfolgend werden zahlreiche spezifische Details erörtert, um ein umfassendes Verständnis des vorliegenden Gegenstands zu ermöglichen.

Es versteht sich auch, dass, obwohl die Begriffe "erstes", "zweites" usw. hier zur Beschreibung verschiedener Elemente, insbesondere verschiedener Schichten, verwendet werden können, diese Elemente durch diese Begriffe nicht eingeschränkt werden sollen. Diese Begriffe werden nur verwendet, um ein Element von einem anderen zu unterscheiden. Zum Beispiel könnte ein erstes Objekt oder ein erster Schritt als zweites Objekt oder zweiter Schritt bezeichnet werden, und in ähnlicher Weise könnte ein zweites Objekt oder ein zweiter Schritt als erstes Objekt oder erster Schritt bezeichnet werden. Das erste Objekt bzw. der erste Schritt und das zweite Objekt bzw. der zweite Schritt sind beide Objekte bzw. Schritte, aber sie sind nicht als dasselbe Objekt bzw. derselbe Schritt zu betrachten.

Die in der Beschreibung der vorliegenden Offenbarung verwendete Terminologie dient der Beschreibung bestimmter Ausführungsformen. Wie in der vorliegenden Beschreibung und den Ansprüchen verwendet, sind die Singularformen "ein", "eine" und "die" so zu verstehen, dass diese auch die Pluralformen einschließen, sofern der Kontext nicht eindeutig etwas Anderes vorgibt. Es versteht sich auch, dass der Begriff "und/oder", wie er hier verwendet wird, sich auf alle möglichen Kombinationen von einem oder mehreren der zugehörigen aufgelisteten Elemente bezieht und diese einschließt. Es versteht sich weiterhin, dass die Begriffe "beinhaltet", "einschließlich", "umfasst" und/oder "umfassend", wenn sie in der vorliegenden Beschreibung und den Ansprüchen verwendet werden, das Vorhandensein der angegebenen Merkmale, Schritte, Operationen, Elemente und/oder Komponenten spezifizieren, aber nicht das Vorhandensein oder Hinzufügen eines oder mehrerer anderer Merkmale, Schritte, Operationen, Elemente, Komponenten und/oder Gruppen davon ausschließen.

Unter Schlauch wird ein vorzugsweise flexibler länglicher Hohlkörper mit vorzugsweise im Wesentlichen rundem Querschnitt verstanden. Der Grad der Flexibilität ist nicht beschränkt. Ein dichter Schlauch kann als Leitung zur Förderung fester, flüssiger und gasförmiger Stoffe verwendet werden, als deren Behälter dienen oder durch ein Medium im Inneren erwünschte Eigenschaften erhalten.

Im Kontext der vorliegenden Beschreibung bezieht sich im Kontext des Schlauches das Innere bzw. die innere Schicht, auf die Seite des Schlauches, die näher an der Seite, die mit dem den Schlauch durchströmenden Mediums in Kontakt steht, liegt. Das Äußere des Schlauches bzw. die äußere Schicht, ist demnach die Seite des Schlauches, die näher an der Seite liegt, die mit der den Schlauch umgebenden Umwelt/Umgebung in Kontakt steht.

Eine innere Schicht kann aber muss nicht zwangsläufig die Schicht sein, die tatsächlich mit dem den Schlauch durchströmenden Medium in Kontakt steht. Die Schicht, die tatsächlich mit dem den Schlauch durchströmenden Medium in Kontakt steht, kann auch als innerste Schicht bezeichnet werden.

Eine äußere Schicht kann aber muss nicht zwangsläufig die Schicht sein, die tatsächlich mit der den Schlauch umgebenden Umwelt/Umgebung in Kontakt steht. Die Schicht, die tatsächlich mit der den Schlauch umgebenden Umwelt/Umgebung in Kontakt steht, kann auch als äußerste Schicht bezeichnet werden.

Der Erfindung liegt die Erkenntnis zugrunde, dass man die Temperatur- und Druckmessung in einem Schlauch auch ohne einen Sensor im bisherigen Sinne ausführen kann. Dazu benutzt man einen speziellen Schlauch und nutzt diesen selbst als Mess-Sensorik.

Der erfindungsgemäße Schlauch weist mindestens eine elektrisch leitfähige Schicht auf.

Wird der Schlauch nun mit Druck und/oder Temperatur beaufschlagt, ändert sich die Leitfähigkeit des Werkstoffmaterials in der elektrisch leitfähigen Schicht so, dass man den gemessenen elektrischen Widerstand des Materials mit dem anliegenden Druck bzw. der herrschenden Temperatur korrelieren kann. Mit diesem Aufbau kann der anliegende Druck bzw. die herrschende Temperatur bestimmt werden ohne dass das Medium in dem Schlauch direkt mit einem Messfühler kontaktiert werden muss.

Gemäß einem Aspekt der vorliegenden Erfindung ändert sich die Größe des elektrischen Widerstands mit ansteigendem Druck bzw. ansteigender Temperatur.

Über die Änderung in der Größe des elektrischen Widerstands mit ansteigendem Druck und bzw. ansteigender Temperatur kann ein einfach auszuwertender Zusammenhang zwischen diesen Größen erreicht werden.

Der erfindungsgemäße Schlauch ist daher ein mehrschichtiger Schlauch, umfassend mindestens eine elektrisch leitfähige Schicht, wobei die mindestens eine elektrisch leitfähige Schicht mit einer Messeinrichtung verbunden ist, die derart ausgebildet ist um den elektrischen Widerstand der mindestens einen elektrisch leitfähigen Schicht zu messen.

Diese elektrisch leitfähige Schicht kann über die gesamte Länge des Schlauches erstreckt sein oder lediglich in einem Teil des Schlauches vorliegen.

Geeignete Messeinrichtungen sind dem Fachmann bekannt und umfassen alle Arten von elektrischen Widerstandsmessgeräten (veraltet auch als Ohmmeter bezeichnet).

Der Widerstand kann neben den klassischen Verfahren auch mit einem elektrischen Wechselfeld bestimmt werden.

Die Messeinrichtung ist direkt auf dem Schlauch angebracht.

**In** einer alternativen nicht erfindungsgemäßen Ausführungsform ist die Messeinrichtung über geeignete Leitungen mit der elektrisch leitfähigen Schicht in dem Schlauch verbunden. So wird es ermöglicht, dass Schlauch und Messeinrichtung an verschiedenen Orten vorliegen können.

Die Position und/oder die Beschaffenheit der mindestens einen elektrisch leitfähigen Schicht in dem Schlauch ist im Wesentlichen nicht begrenzt.

Es ist erfindungsgemäß, dass die mindestens eine elektrisch leitfähige Schicht eine elektrisch leitfähige Festigkeitsträgerschicht umfasst.

In einer nicht erfindungsgemäßen Alternative kann die mindestens eine elektrisch leitfähige Elastomerschicht in einem einschichtigen Schlauch die einzige vorhandene Schicht oder eine im Wesentlichen beliebige Schicht in einem mehrschichtigen Schlauch darstellen.

In einer nicht erfindungsgemäßen alternativen Ausführungsform umfasst die mindestens eine elektrisch leitfähige Schicht eine elektrisch leitfähige Elastomerschicht, die mindestens ein elektrisch leitfähiges Elastomer und/oder mindestens ein elektrisch leitfähiges Additiv umfasst.

Geeignete Elastomere umfassen Acrylatkautschuk (AEM + ACM), EthylenVinylacetat-Kautschuk (EVA), Polybutadien (BR), chlorsulfoniertes Polyethylen (CSM), chloriertes Polyethylen (CM), Epichlorhydrin-Kautschuk (ECO), Chloroprenkautschuk (CR), Polyisopren (IR), Fluorkautschuk (FPM, FKM, FFKM), Styrol-Butadien-Kautschuk (SBR), Isobutylen-Isopren-Kautschuk (IIR), halogenierten Isobutylen-Isopren- Kautschuk (CIIR + BIIR), Acrylnitril-Butadien-Kautschuk (NBR), teilhydrierten oder vollständig hydriertem Acrylnitrilbutadien-Kautschuk (HNBR), Verschnitte aus NBR mit PVC (NBR-PVC), teilhydrierten oder vollständig hydrierten carboxylierten Acrylnitrilbutadien-Kautschuk, Ethylen-Propylen-Dien-Kautschuk (EPDM), Ethylen-Propylen-Kautschuk (EPM), Naturkautschuk (NR), bromierten Isobutylen-Paramethylstyrol-Kautschuk, Silikonkautschuk (MVQ), thermoplastische Elastomere, wie thermoplastisches Copolyamid (TPA-A), thermoplastisches Polyesterelastomer (TPE-E), thermoplastische Elastomere auf Olefinbasis (TPE-O), Styrol-Blockcopolymere (TPE-S), thermoplastische Elastomere auf Urethanbasis (TPE-U), thermoplastische Vulkanisate oder vernetzte thermoplastische Elastomere auf Olefinbasis (TPE-V), sowie Mischungen, Verschnitte und Copolymere davon.

Diese Elastomere können entweder chemisch vernetzt, insbesondere irreversibel chemisch vernetzt, oder unvernetzt vorliegen.

Irreversibel vernetzte Elastomere werden im Allgemeinen durch Vulkanisation von natürlichen und synthetischen Kautschuken hergestellt. Unter Vulkanisation versteht man die Überführung von plastischen, kautschukartigen, ungesättigten oder gesättigten Polymeren in den gummielastischen Zustand, klassischerweise durch Vernetzung mit Schwefel(-Verbindungen). Dabei werden die einzelnen Polymerketten irreversibel durch kovalente Bindungen miteinander verbunden. Bei manchen Synthesekautschuken, insbesondere bei hoch oder vollständig gesättigten Kautschuken, werden schwefelfreie Vernetzer als Vulkanisationsmittel verwendet, wie z.B. Peroxide, Harze, Metalloxide (MgO, ZnO), Diamine oder Bisphenole.

Geeignete Peroxide umfassen z.B. 2,5-Dimethyl-2,5-bis-(tert.-butylperoxi)hexan (DTBPH), 1,4-Bis-(tert.-butylperoxi-isopropyl)-benzol (TBPDB), 1,1-Di-tert.-butyl-peroxi-3,3,5-trimethyl-cyclohexan (TBPTC), Dicumylperoxid (DCP) etc., ggf. in Kombination mit Coagenzien, wie insbesondere Ethylenglycoldimethylacrylat (EDMA), Triallylcyanurat (TAC), Trimethylolpropantrimethacrylat (TRIM) und/oder Diallylphtalat (DAP), oder andere gängige Peroxide, wie sie im Buch "Kautschuktechnologie (Werkstoffe-Verarbeitung-Produkte) 3.Auflage" von F. Röthemeyer/F. Sommer beschrieben sind.

In einer nicht erfindungsgemäßen Alternative, insbesondere wenn die eingesetzten Elastomeren in der mindestens einen elektrisch leitfähigen Schicht selbst nicht elektrisch leitend sind, wird mindestens ein elektrisch leitendes Additiv eingesetzt.

Bei dem elektrisch leitenden Additiv handelt es sich bevorzugt um einen leitfähigen Ruß, Kohlenstoffnanoröhrchen (Carbon Nano Tubes (CNT)), Graphen, und/oder um eine ionische Flüssigkeit.

Das elektrisch leitende Additiv wird in einer bevorzugten Ausführungsform in Mengen von 5 bis 100 phr, besonders bevorzugt in Mengen von 10 bis 80 phr, ganz besonders bevorzugt in Mengen von 20 bis 60 phr, eingesetzt.

Vorzugsweise werden Ruß und Graphen in Mengen von 5 bis 100 phr, besonders bevorzugt in Mengen von 10 bis 80 phr, ganz besonders bevorzugt in Mengen von 20 bis 60 phr, eingesetzt.

Vorzugsweise werden Kohlenstoffnanoröhrchen (Carbon Nano Tubes (CNT)), in Mengen von 1 bis 10 phr und insbesondere in Mengen von 2 bis 5 phr eingesetzt. Die vorliegend verwendete Angabe phr (parts per hundred parts of rubber (by weight)) ist die in der Elastomer- bzw. Kautschukindustrie übliche Mengenangabe für Mischungsrezepturen. Die Dosierung der Gewichtsteile der einzelnen Substanzen wird stets auf 100 Gewichtsteile der gesamten Masse aller in der Mischung vorhandenen Polymere bezogen.

Erfindungsgemäß ist die mindestens eine elektrisch leitfähige Schicht eine elektrisch leitfähige Festigkeitsträgerschicht, wobei mindestens ein Teil des Festigkeitsträgers elektrisch leitfähig ist.

Es ist eine Festigkeitsträgerschicht vorhanden und es handelt sich um einen mehrschichtigen Schlauch.

Eine Festigkeitsträgerschicht ist in der Regel zwischen zwei anderen Schichten, beispielsweise einer innersten und einer äußersten Schicht vorhanden.

Es sind jedoch auch komplexere mehrschichtige Schläuche denkbar, wobei neben der innersten und der äußersten Schicht auch weitere innere bzw. äußere Schichten vorliegen. Hier kann die Festigkeitsträgerschicht zwischen beliebigen Schichten angeordnet werden.

Es sind auch Ausführungsformen mit mehreren Festigkeitsträgerschichten denkbar.

Bei der Festigkeitsträgerschicht handelt es sich um eine textile Festigkeitsträgerschicht.

Der Festigkeitsträger umfasst ein Cord, Geflecht oder Gewebe.

Als Materialien für den Festigkeitsträger können alle der fachkundigen Person bekannten und geeigneten Materialien verwendet werden, die bevorzugt aus der Gruppe ausgewählt sind, bestehend aus Polyamid (PA), z.B. PA6, PA6.6, PA11, PA12, PA6.10, PA6.12, und/oder Copolyamiden und/oder Polyestern (PES) und/oder Rayon und/oder Polyethylenterephthalat (PET) und/oder Polyethylennaphthalat (PEN) und/oder Polybutylenterephthalat (PBT) und/oder Polycarbonat (PC) und/oder ungesättigtem Polyesterharz (UP) und/oder Poly (1,4-cyclohexandimethylenterephthalat) (PCDT) und/oder Polyvinylalkohol (PVAL) und/oder Polyoxibenzonaphtoat und/oder Polyvinylacetal (PVA) und/oder Polyetheretherketon (PEEK) und/oder Polyethylen-2,6-naphthalat (PEN) und/oder Polyphenylen und/oder Polyphenylenoxid (PPO) und/oder Polyphenylensulfid (PPS) und/oder Polyphenylenether und/oder Polybenzoxazol (PBO) und/oder Polyoxadiazol (POD) und/oder Polyetherimid (PEI) und/oder m-Aramid und/oder p-Aramid und/oder Glas und/oder Metall und/oder Keramik und/oder Kohlefasern und/oder Wolle und/oder Baumwolle und/oder Polypropylen (PP) und/oder Polyethylen (PE) und/oder ultrahochmolekularem PE (UPE) und/oder modifizierter Viskose und/oder hochkristallinen Polymerfasern und/oder Fluorpolymeren, wie, Polytetrafluorethylen (PTFE) und Perfluorethylenpropylen (FEP), und/oder Fluor-Copolymeren, wie insbesondere Poly(vinylidenfluorid-co-hexafluorpropylen) (VDF/HFP), Poly(vinylidenfluorid-co-hexafluorpropylen-co-tetrafluorethylen) (TFB), Poly(vinylidenfluorid-co-tetrafluorethylen-co-perfluormethylvinylether) (VDF/TFE/PMVE), Poly(tetrafluorethylen-co-propylen) (TFE/P) und Poly(vinylidenfluorid-co-chlortrifluorethylen) (VDF/CTFE) und/oder einer Hybridvariante der genannten Materialien.

Besonders bevorzugt sind Festigkeitsträger, die Polyamid, Polyester, Rayon, Aramid, Polyvinylalkohol, Polyphenylensulfid, Polyetheretherketon, Stahl, Edelstahl, Kohlefaser, Glasfaser und/oder Kombinationen daraus umfassen oder daraus bestehen.

Der Festigkeitsträger kann in einer nicht erfindungsgemäßen Alternative vollständig aus einem elektrisch leitfähigen Material bestehen.

Der Hauptbestandteil des Festigkeitsträgers ist ein nicht elektrisch leitfähiges Material, sodass die elektrische Leitfähigkeit des Festigkeitsträgers dadurch erreicht wird, dass mindestens ein Teil des Festigkeitsträgers elektrisch leitfähig ist.

Dieses Teil ist mindestens ein Faden in einem Geflecht, einem Cord oder einem Gewebe.

Solche leitfähige Fäden umfassen nicht erfindungsgemäß metallische Fäden und erfindungsgemäß Gemische, wie z.B. Stapelfasern, mit leitfähigen Dispersionen beschichtete Fäden und/oder carbonisierte Fäden als elektrisch leitfähiges Material oder bestehen daraus.

Gemäß einer bevorzugten Ausführungsform ist die Einbringung der leitfähigen Teile des Festigkeitsträgers, in Form von leitfähigen Fäden, in geflochtener oder cordisierter Ausführung, ohne Überschneidung der elektrisch leitfähigen Teile ausgeführt.

Eine solche Ausführungsform hat den Vorteil, dass durch die Kombination von leitfähigen Schichten mit leitfähigen Festigkeitsträgern, die Sensitivität des Verbundkörpers in einzelnen Fällen erhöht werden kann.

In einer anderen bevorzugten Ausführungsform ist die Einbringung der leitfähigen Teile des Festigkeitsträgers, in Form von leitfähigen Fäden, in geflochtener oder cordisierter Ausführung, mit Überschneidung der elektrisch leitfähigen Teile ausgeführt.

Eine solche Ausführungsform hat den Vorteil, dass durch die Kombination von leitfähigen Schichten mit leitfähigen Festigkeitsträgern, die Sensitivität des Verbundkörpers in einzelnen Fällen erhöht werden kann.

Neben der mindestens einen elektrisch leitfähigen Schicht, kann der Schlauch noch beliebig viele anderer Schichten umfassen.

Diese anderen Schichten können beispielsweise Kunststoffe umfassen. Geeignete Kunststoffe umfassen Polyethylen (PE), Polypropylen (PP),Polyamid (PA) inklusive Ihrer jeweiligen Variationen (z.B. PE-LD, PE-LLD, PE-HD, PA 6, PA 66), Polyethylenterephthalat (PET), Ethylen-Vinylalkohol (EVOH), Polystyrol (PS), Polyvinylchlorid (PVC), Polymilchsäure (PLA), Polymethylmethacrylat (PMMA), Polyetherimid (PEI), Polyetheretherketon (PEEK), Polycarbonat (PC), Polyphenylensulfid (PPS), Polyoxymethylen (POM), Polysulfon (PSU), Polyphthalamide (PPA), Polyethersulfon (PES) oder Fluorkunststoffe (wie z.B. PVDF, ETFE, THV, FEP, PFA, PTFE) und/oder andere biobasierte Kunststoffe, umfassen.

Diese anderen Schichten können beispielsweise auch Elastomere umfassen. Geeignete Elastomere umfassen hierbei Acrylatkautschuk (AEM + ACM), EthylenVinylacetat-Kautschuk (EVA), Polybutadien (BR), chlorsulfoniertes Polyethylen (CSM), chloriertes Polyethylen (CM), Epichlorhydrin-Kautschuk (ECO), Chloroprenkautschuk (CR), Polyisopren (IR), Fluorkautschuk (FPM, FKM, FFKM), Styrol-Butadien-Kautschuk (SBR), Isobutylen-Isopren-Kautschuk (IIR), halogenierte Isobutylen-Isopren- Kautschuk (CIIR + BIIR), Acrylnitril-Butadien-Kautschuk (NBR), teilhydrierten oder vollständig hydrierten Acrylnitrilbutadien-Kautschuk (HNBR), Verschnitte aus NBR mit PVC (NBR-PVC), teilhydrierten oder vollständig hydrierten carboxyliertem Acrylnitrilbutadien-Kautschuk, Ethylen-Propylen-Dien-Kautschuk (EPDM), Ethylen-Propylen-Kautschuk (EPM), Naturkautschuk (NR), bromierten Isobutylen-Paramethylstyrol-Kautschuk, Silikonkautschuk (MVQ), thermoplastische Elastomere, wie thermoplastisches Copolyamid (TPA-A), thermoplastischer Polyesterelastomer (TPE-E), thermoplastische Elastomeren auf Olefinbasis (TPE-O), Styrol-Blockcopolymere (TPE-S), thermoplastische Elastomeren auf Urethanbasis (TPE-U), thermoplastische Vulkanisate oder vernetzte thermoplastische Elastomere auf Olefinbasis (TPE-V), sowie Mischungen, Verschnitte und Copolymeren davon.

Diese Elastomere können entweder chemisch vernetzt, insbesondere irreversibel chemisch vernetzt, oder unvernetzt vorliegen, wie dies vorstehend bereits definiert ist.

Ferner können in jeder vorhandenen Schicht noch in der Kunststoff- bzw. Elastomerindustrie üblicherweise verwendeten Additive enthalten sein.

Diese umfassen beispielsweise Additive, ausgewählt aus der Gruppe, bestehend aus Füllstoffen wie z.B. Siliziumdioxid (Silica/Kieselsäure), Kaolin, Glimmer, Graphit, Carbon Nanotubes, Kohlefasern, Ruß, Fettsäuren (wie z.B. Palmitin- oder Stearinsäure), Weichmacher (wie z.B. mineralisches Weißöl oder Ester-Weichmacher), Gleitmittel, Polyethylenglycol, Geruchsabsorber, antimikrobiellen Substanzen, detektierbare Füllstoffe (wie z.B. Eisenpartikel oder Magnetit), organischen und anorganischen Farbpigmenten (wie z.B. Titandioxid), Haftvermittler, Verarbeitungshilfsmittel, Flammschutzmittel (wie z.B. Mg(OH)2, Al(OH)3, Gips, Intumeszenz-Verbindungen wie Blähgraphit), Alterungsschutzmittel, Metalloxiden und Metallhydroxiden und Metallcarbonaten, Verzögerern, Aktivatoren, Faktis, Vernetzungsmittel (wie z.B. Peroxide, Schwefel, Schwefelbeschleuniger, Harze, usw.), oder andere Additiven, wie sie in "Kautschuktechnologie (Werkstoffe-Verarbeitung-Produkte) 3. Auflage" von F. Röthemeyer/F. Sommer beschrieben sind.

Elektrisch leitfähige Additive sind vorzugsweise lediglich in einer Schicht vorhanden.

**In** einer anderen nicht erfindungsgemäßen alternativen Ausführungsform sind elektrisch leitfähige Additive vorzugsweise lediglich in einer Schicht in höherer Dosierung vorhanden, so dass die elektrische Leitfähigkeit der umgebenden Schichten signifikant kleiner ist.

Eine nicht erfindungsgemäßen Alternative ist ferner vorzugsweise dadurch gekennzeichnet, dass die mindestens eine elektrisch leitfähige Schicht eine elektrisch leitfähige Elastomerschicht ist, die direkt mit einem den Schlauch durchströmenden Medium in Kontakt steht. Sie stellt demnach die innerste Schicht dar.

**In** einer nicht erfindungsgemäßen Alternative kann die elektrisch leitfähige Elastomerschicht die einzige Schicht in dem Schlauch sein, so dass der Schlauch einschichtig ist.

In einer nicht erfindungsgemäßen Alternative kann die elektrisch leitfähige Elastomerschicht eine von mehreren Schichten in dem Schlauch sein, so dass der Schlauch mehrschichtig ist. Bei dieser mehrschichtigen Ausführungsform können die übrigen Schichten beliebig aus weiteren Elastomer-, Kunststoff und/oder Festigkeitsträgerschichten ausgewählt sein.

Eine nicht erfindungsgemäße Alternative ist ferner vorzugsweise dadurch gekennzeichnet, dass der Schlauch ein mehrschichtiger Schlauch ist und die mindestens eine elektrisch leitfähige Schicht eine elektrisch leitfähige Elastomerschicht ist, die nicht direkt mit einem den Schlauch durchströmenden Medium in Kontakt steht.

In dieser nicht erfindungsgemäßen alternativen Ausführungsform bildet demnach eine andere Schicht als die elektrisch leitfähige Schicht die innerste Schicht.

Als innerste Schicht kann hierbei eine beliebige Elastomer- und/oder Kunststoffschicht vorhanden sein.

Bei dieser nicht erfindungsgemäßen mehrschichtigen Ausführungsform können auch weitere Schichten beliebig aus weiteren Elastomer-, Kunststoff und/oder Festigkeitsträgerschichten ausgewählt sein.

In einer bevorzugten Ausführungsform, weist der mehrschichtige Schlauch mindestens eine Innenschicht auf und die elektrisch leitfähige Festigkeitsträgerschicht ist so angeordnet, dass sie nicht direkt mit einem den Schlauch durchströmenden Medium in Kontakt steht.

Auch hierbei können die Innenschicht bzw. die innerste Schicht und alle ggf. weiteren vorhandenen Schichten aus weiteren Elastomer-, Kunststoff und/oder Festigkeitsträgerschichten ausgewählt sein.

In mehrschichtigen Schläuchen können zwischen allen Schichten auch Klebeschichten und/oder Haftvermittlerschichten vorliegen.

Die vorliegende Erfindung betrifft auch ein Verfahren zur Messung eines Drucks und/oder einer Temperatur in einem mehrschichtigen Schlauch wie vorstehend beschreiben, umfassend das Messen des elektrischen Widerstands der elektrisch leitfähigen Schicht an mindestens einem Punkt der mindestens einen elektrisch leitfähigen Schicht und das Bestimmen des Drucks und/oder der Temperatur ausgehend von dem gemessenen elektrischen Widerstands.

Alle Definitionen und bevorzugten Ausführungsformen, die vorstehend für den mehrschichtigen Schlauch beschrieben sind, gelten analog für das erfindungsgemäße Verfahren.

Damit aus der Messung des elektrischen Widerstands in einem mehrschichtigen Schlauch die anliegende Temperatur bzw. der anliegende Druck bestimmt werden kann, ist es vorteilhaft, wenn zuvor eine entsprechende Korrelation aufgestellt wurde, da diese Korrelation vom Aufbau des Schlauches bzw. von den gewählten Materialien abhängig ist.

In einer bevorzugten Ausführungsform ist das erfindungsgemäße Verfahren dadurch gekennzeichnet, dass der elektrische Widerstand der mindestens einen elektrisch leitfähigen Schicht an mindestens zwei unterschiedlichen Stellen bestimmt wird.

Dies hat den Vorteil, dass beispielsweise eine Druck- bzw. Temperaturänderung entlang eines Schlauches verfolgt werden kann.

In einer weiteren bevorzugten Ausführungsform ist das erfindungsgemäße Verfahren dadurch gekennzeichnet, dass sich zwischen den zwei unterschiedlichen Stellen an denen der elektrische Widerstand der mindestens einen elektrisch leitfähigen Schicht bestimmt wird, mindestens eine Armatur befindet.

Diese Ausführungsform hat den Vorteil, dass beispielsweise der Einfluss der Armatur auf den Druck und die Temperatur in dem Schlauch bestimmt werden kann.

Der Begriff Armatur kann hier technisch sehr breit verstanden werde und umfasst beispielsweise Filter, Abscheidungsvorrichtungen, Pumpen und/oder Bauteile mit denen zwei Schlauchteile miteinander verbunden werden können, um eine Medienübertragung leckagefrei zu gewährleisten.

Vorzugsweise umfasst die mindestens eine Armatur ein Dieselpartikelfilter (DPF) oder ein Ottopartikelfilter (OPF).

So kann die Messung der Druckdifferenz zwischen zwei Schlauchstücken über die Widerstandseigenschaften der elektrisch leitfähigen Schicht, z.B. vor und hinter dem DPF/OPF, gemessen werden. Dies ist von Vorteil, weil so die Referenz für die Messung immer mitbewertet werden kann und diese auch immer den gleichen Bedingungen unterliegt (Temperatur, Luftfeuchte, Belastungshistorie).

In einer weiteren bevorzugten Ausführungsform ist das erfindungsgemäße Verfahren dadurch gekennzeichnet, dass die Messung des elektrischen Widerstands der mindestens einen elektrisch leitfähige Schicht an mindestens zwei unterschiedlichen Stellen bestimmt wird, wobei eine der Stellen, an der der elektrische Widerstand gemessen wird, an einer Stelle des Schlauchs erfolgt, die mit einem anderen Druck und/oder einer anderen Temperatur beaufschlagt ist als die mindestens andere Stelle, an der der elektrische Widerstand gemessen wird.

Ein Beispiel hierfür ist die Messung unter Druck vor dem DPF/OPF, wobei gleichzeitig ein druckloses Schlauchstück als Referenz dient, um Änderungen des elektrischen Widerstands beispielsweise durch Feuchtigkeits-, Temperatur- oder Alterungseffekte zu kompensieren.

Die vorliegende Erfindung betrifft auch eine Verwendung eines mehrschichtigen Schlauchs wie vorstehend beschreiben, in automotiven und/oder industriellen Anwendungen, wie beispielsweise in einem Kraftfahrzeug.

Alle Definitionen und bevorzugten Ausführungsformen, die vorstehend für den mehrschichtigen Schlauch beschrieben sind, gelten analog für die erfindungsgemäße Verwendung.

Die Erfindung wird nachfolgend anhand nicht beschränkender Beispiele näher erläutert.

### Beispiele

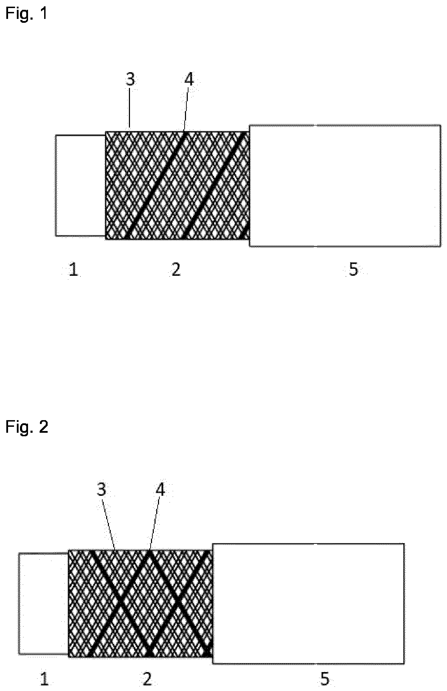

In Figur 1 ist ein dreischichtiger Schlauch dargestellt.

Der Schlauch umfasst eine Innenschicht (innerste Schicht) und eine Außenschicht (äußerste Schicht) und eine dazwischenliegende Festigkeitsträgerschicht. Die Festigkeitsträgerschicht weist eine cordisierte oder geflochtene Ausführung auf, wobei ein Teil des Festigkeitsträgers nicht elektrisch leitend ist. Die elektrische Leitfähigkeit wird durch das Einbringen von elektrisch leitfähigen Fäden ohne Überschneidung dieser elektrisch leitfähigen Fäden erreicht.

In Figur 2 ist ein weiterer dreischichtiger Schlauch dargestellt.

Der Schlauch umfasst eine Innenschicht (innerste Schicht) und eine Außenschicht (äußerste Schicht) und eine dazwischenliegende Festigkeitsträgerschicht. Die Festigkeitsträgerschicht weist eine cordisierte oder geflochtene Ausführung auf, wobei ein Teil des Festigkeitsträgers nicht elektrisch leitend ist. Die elektrische Leitfähigkeit wird durch das Einbringen von elektrisch leitfähigen Fäden mit Überschneidung dieser elektrisch leitfähigen Fäden erreicht.

### Bezugszeichenliste

- 1: Innenschicht
- 2: Festigkeitsträgerschicht
- 3: Elektrisch nicht leitender Teil des Festigkeitsträgers
- 4: Elektrisch leitfähiger Teil des Festigkeitsträger (elektrisch leitfähiger Faden oder Cord)
- 5: Außenschicht

## Patentansprüche

1. Mehrschichtiger Schlauch, umfassend mindestens eine elektrisch leitfähige Schicht und eine Messeinrichtung, wobei die Messeinrichtung direkt auf dem Schlauch angebracht ist, wobei die mindestens eine elektrisch leitfähige Schicht mit der Messeinrichtung verbunden ist, die derart ausgebildet ist um den elektrischen Widerstand der mindestens einen elektrisch leitfähigen Schicht zu messen, **wobei** die mindestens eine elektrisch leitfähige Schicht eine textile elektrisch leitfähige Festigkeitsträgerschicht (2) umfasst, wobei Hauptbestandteil des Festigkeitsträgers der Festigkeitsträgerschicht (2) ein nicht elektrisch leitfähiges Material ist, sodass die elektrische Leitfähigkeit des Festigkeitsträgers dadurch erreicht wird, dass mindestens ein oder mehrere Teile (4) des Festigkeitsträgers elektrisch leitfähig sind, und wobei dieser oder diese Teile leitfähige Fäden in einem Geflecht, einem Cord oder einem Gewebe sind und wobei die leitfähigen Fäden Stapelfasern, mit leitfähigen Dispersionen beschichtete Fäden und/oder carbonisierte Fäden als elektrisch leitfähiges Material umfassen.

2. Mehrschichtiger Schlauch gemäß Anspruch 1, **dadurch**
**gekennzeichnet, dass** die Einbringung der leitfähigen Teile des Festigkeitsträgers (4) in geflochtener oder cordisierter Ausführung ohne Überschneidung der elektrisch leitfähigen Teile ausgeführt ist oder **dadurch gekennzeichnet, dass** die Einbringung der leitfähigen Teile des Festigkeitsträgers (4) in dicht geflochtener oder cordisierter Ausführung mit Überschneidung der elektrisch leitfähigen Teile ausgeführt ist.

3. Mehrschichtiger Schlauch gemäß irgendeinem der vorhergehenden Ansprüche, **dadurch gekennzeichnet, dass** der Schlauch mindestens eine Innenschicht (1) aufweist und wobei die textile elektrisch leitfähige Festigkeitsträgerschicht (2) derart angeordnet ist, dass sie nicht direkt mit einem den Schlauch durchströmenden Medium in Kontakt steht.

4. Verfahren zur Messung eines Drucks und/oder einer Temperatur in einem mehrschichtigen Schlauch gemäß irgendeinem der Ansprüche 1 bis 3, umfassend das Messen des elektrischen Widerstands der mindestens einen elektrisch leitfähigen Schicht an mindestens einem Punkt der mindestens einen elektrisch leitfähigen Schicht und das Bestimmen des Drucks und/oder der Temperatur ausgehend von dem gemessenen elektrischen Widerstand.

5. Verfahren gemäß Anspruch 4, **dadurch gekennzeichnet, dass** der elektrische Widerstand der mindestens einen elektrisch leitfähigen Schicht an mindestens zwei unterschiedlichen Stellen bestimmt wird.

6. Verfahren gemäß Anspruch 5, **dadurch gekennzeichnet, dass** sich zwischen den zwei unterschiedlichen Stellen an denen der der elektrische Widerstand der mindestens einen elektrisch leitfähigen Schicht bestimmt wird, mindestens eine Armatur befindet.

7. Verfahren gemäß Anspruch 6, **dadurch gekennzeichnet, dass** die mindestens eine Armatur ein Dieselpartikelfilter oder ein Ottopartikelfilter ist.

8. Verfahren gemäß irgendeinem der Ansprüche 4 bis 7, **dadurch**
**gekennzeichnet, dass** die Messung des elektrischen Widerstands der mindestens einen elektrisch leitfähige Schicht an mindestens zwei unterschiedlichen Stellen bestimmt wird, wobei eine der Stellen, an der der elektrische Widerstand gemessen wird, an einer Stelle des Schlauchs erfolgt, die mit einem anderen Druck und/oder einer anderen Temperatur beaufschlagt ist als die mindestens eine andere Stelle, an der der elektrische Widerstand gemessen wird.

9. Verwendung eines mehrschichtigen Schlauchs gemäß irgendeinem der Ansprüche 1 bis 3 in automotiven und/oder industriellen Anwendungen, insbesondere in einem Kraftfahrzeug.

## Claims

1. Multilayer hose, comprising at least one electrically conductive layer and one measuring device, wherein the measuring device is attached directly to the hose, wherein at least one electrically conductive layer is connected to the measuring device, which is so designed to measure the electrical resistance of at least one electrically conductive layer, wherein at least one electrically conductive layer is a textile electrically conductive layer. (2), wherein the main component of the strength member of the strength support layer (2) is a non-electrically conductive material, so that the electrical conductivity of the strength member is achieved by at least one or more parts of the strength member being electrically conductive, and where this part or parts is at least one thread (4) in a braid, cord or fabric, and the conductive threads being staple fibres, include threads coated with conductive dispersions and/or carbonized threads as electrically conductive material.

2. A multilayer hose according to claim 1, **characterized in that** the introduction of the conductive parts of the strength member (4) is carried out in braided or cordized design without overlapping the electrically conductive parts or **characterized in that** the introduction of the conductive parts of the strength member (4) is carried out in a densely braided or cordized design with overlapping of the electrically conductive parts.

3. A multilayer hose according to any of the preceding claims, **characterized in that** the hose is a multilayer hose having at least one inner layer (1) and wherein the at least one electrically conductive layer comprises a textile electrically conductive strength support layer (2) arranged in such a way that it is not in direct contact with a medium flowing through the hose.

4. A method for measuring pressure and/or temperature in a multilayer hose according to any of claims 1 to 3, comprising the measurement of the electrical resistance of the electrically conductive layer at at least one point of the at least one electrically conductive layer and the determination of the pressure and/or temperature based on the measured electrical resistance.

5. A method according to claim **4, characterized in that** the electrical resistance of at least one electrically conductive layer is determined at at least two different locations.

6. The method according to claim 5, **characterized in that** there is at least one valve between the two different places at which the electrical resistance of at least one electrically conductive layer is determined.

7. The method according to claim 6, **characterized in that** the at least one valve is a diesel particulate filter or a gasoline particulate filter.

8. A method according to any of claims 4 to 7, **characterized in that** the measurement of the electrical resistance of at least one electrically conductive layer is determined at at least two different points, one of the places at which the electrical resistance is measured being at a point of the hose which is subjected to a different pressure and/or temperature than that at least one other place, by which the electrical resistance is measured.

9. Use of a multilayer hose according to any of claims 1 to 3 in automotive and/or industrial applications, in particular in a motor vehicle.

## Revendications

1. Tuyau multicouche, comprenant au moins une couche conductrice d'électricité et un dispositif de mesure, dans lequel le dispositif de mesure est fixé directement au tuyau, dans lequel au moins une couche conductrice d'électricité est connectée au dispositif de mesure, qui est conçu de manière à mesurer la résistance électrique d'au moins une couche conductrice d'électricité, dans lequel au moins une couche conductrice d'électricité est une couche textile conductrice d'électricité. (2), dans lequel le composant principal de l'élément de résistance de la couche de support de résistance (2) est un matériau non conducteur d'électricité, de sorte que la conductivité électrique de l'élément de résistance est obtenue par au moins une ou plusieurs parties de l'élément de résistance étant conductrices d'électricité, et lorsque cette partie ou ces parties sont constituées d'au moins un fil (4) dans une tresse, un cordon ou un tissu, et que les fils conducteurs sont des fibres discontinues, inclure des fils revêtus de dispersions conductrices et/ou de fils carbonisés en tant que matériau conducteur d'électricité.

2. Tuyau multicouche selon la revendication 1, **caractérisé en ce que** l'introduction des parties conductrices de l'élément de résistance (4) est réalisée en version tressée ou cordisée sans chevauchement des parties conductrices d'électricité ou **caractérisée en ce que** l'introduction des parties conductrices de l'élément de résistance (4) est réalisée dans une conception densément tressée ou cordisée avec chevauchement des parties conductrices d'électricité.

3. Tuyau multicouche selon l'une quelconque des revendications précédentes, **caractérisé en ce qu'**il s'agit d'un tuyau multicouche ayant au moins une couche intérieure (1) et dans lequel la ou les couches conductrices d'électricité comprennent une couche de support textile électriquement conductrice (2) disposée de telle sorte qu'elle n'est pas en contact direct avec un fluide circulant à travers le tuyau.

4. Procédé de mesure de la pression et/ou de la température dans un tuyau multicouche selon l'une quelconque des revendications 1 à 3, comprenant la mesure de la résistance électrique de la couche conductrice d'électricité en au moins un point de la ou des couches conductrices d'électricité et la détermination de la pression et/ou de la température sur la base de la résistance électrique mesurée.

5. Procédé selon la revendication 4, **caractérisé en ce que** la résistance électrique d'au moins une couche conductrice d'électricité est déterminée à au moins deux endroits différents.

6. Procédé selon la revendication 5, **caractérisé en ce qu'**il y a au moins une vanne entre les deux différents endroits où est déterminée la résistance électrique d'au moins une couche conductrice d'électricité.

7. Procédé selon la revendication 6, **caractérisé en ce que** la ou les soupapes sont un filtre à particules diesel ou un filtre à particules essence.

8. Procédé selon l'une quelconque des revendications 4 à 7, **caractérisé en ce que** la mesure de la résistance électrique d'au moins une couche conductrice d'électricité est déterminée en au moins deux points différents, l'un des points où la résistance électrique est mesurée se situant en un point du tuyau qui est soumis à une pression et/ou à une température différente de celle d'au moins un autre endroit, par lequel la résistance électrique est mesurée.

9. Utilisation d'un tuyau multicouche selon l'une quelconque des revendications 1 à 3 dans des applications automobiles et/ou industrielles, en particulier dans un véhicule à moteur.
